# EUROPEAN PATENT APPLICATION

(11) **EP 2 796 392 A1**
(43) Date of publication of application: **29.10.2014**
(21) Application number: 14177893.6
(22) Date of filing: 16.06.2010
(51) Int. Cl.: B65G 21/16, B65G 21/22

(54) **Bend segment and method for manufacturing a bend segment**

(30) Priority: 16.06.2009 IT MI20091057
(62) Divisional of application: 10725689.3
(71) Applicant: Rexnord Flattop Europe S.r.l., 42015 Correggio (RE) (IT)
(72) Inventor: Andreoli, Andrea, 41123 Modena (MO) (IT); Coen, Daniele, 42020 Albinea (RE) (IT)
(74) Representative: Jansen, Cornelis Marinus

(57) **Abstract**

A bend segment (1) for a conveyor, having at least one curvedly extending guide track (2,2') for guiding a conveyor along a curve, the bend segment (1) comprising a base portion (3) and at least two rails (4) forming a guide track, wherein the rails (4) are each fixedly mounted to the base portion (3) as a separate section in a keyed arrangement (5) along a curved mounting path.

## Description

The invention relates to a bend segment for a conveyor, having at least one curvedly extending guide track for guiding a conveyor along a curve. Such bend segments are known, and may for example be used to guide a number of modular conveyor chains along a curve in a conveying track. The bend segments may have a single guide track or may have a plurality of guide tracks, and the length and radius of the curve may depend on the lay-out of the conveying track.

In view of the great variety of the required number of tracks, radius and length, it is currently most common to manufacture a bend segment by milling the top of a slab of a low-friction, wear resistant plastics material, such as for example UHMWPE, so that the guide rails of the required track remain.

To save costs it has been proposed in EP 0 790 197 to provide the slab as a sandwich structure comprising a top portion of low-friction, wear resistant material and a bottom portion of low-cost material with a higher coefficient of friction. Further, it has been proposed in DE 8 901 563 to provide portions of the rails that are subject to wear, as a curved strip of low friction, wear resistant material. Such a strip may be radially supported by a base portion of low-grade material, and may be fixedly mounted thereto using screws.

Although saving on material costs, such provisions require significantly increased costs for assembly and machining of the portions.

The invention aims to provide a bend segment for a conveyor, in which the costs of material and machining maybe reduced without undue increase in assembly costs.

Thereto, the invention provides for a bend segment for a conveyor, having at least one curvedly extending guide track for guiding a conveyor along a curve, the bend segment comprising a base portion and at least two rails forming a guide track, wherein the rails are each fixedly mounted to the base portion as a separate section in a keyed arrangement along a curved mounting path.

By providing the rails as separate sections they may be made economically from a material with the required low coefficient of friction and high resistance to wear. By fixedly mounting the rails as separate sections to the base portion along a curved mounting path in a keyed arrangement, the rails may be mounted as complete units without the need of further fixation to resist radial forces by e.g. an array of screws along the path. In such keyed arrangement, the rails and the base portion may reach into each other directly or via an intermediate keying element so that they are fixed with respect to each other. Such an arrangement may absorb radius forces exerted by the conveyor without need for further fastening elements or support portions. The keyed arrangement in particular includes an interference fit.

By using rail sections that are straight in unmounted condition, and that are provided with the curvature for the guide track via the keyed arrangement, the rail sections may be manufactured economically in advance, without the need to provide a specific radius of curvature for a specific bend.

Preferably, the keyed arrangement extends continuously along the length of the bend segment. When the rail sections are slidingly engaged by the base portion, assembly of the bend segment may be simplified greatly. The cross-sections of the rails and/or the material may be optimized to facilitate that the rails can assume the required curvature.

By providing the rails as extruded sections, the rails may be preprovided with the required cross section in standard lengths. This way, the rail sections may be cut to the required length without significant loss of material due to machining. Further, the extruded lengths of rail may be provided with the correct cross sectional shape for the keyed arrangement without the need to remove material. As an alternative, the length of the rail may e.g. be provided in a casting process, or may be cut from a slab.

By providing the rails as extruded sections in a ram-extrusion process, also low friction, high wear resistant materials may be processed that have insufficient flow characteristics for a conventional extrusion process. An example of such a material that may be processed using ram extrusion is UHMWPE powder. Surprisingly, it has been found that ramextruded UHMWPE sections have a relatively low resistance against bending, which facilitates providing the rail sections with the required curvature of the track via engagement by the keyed arrangement. Further, such ram extruded rails are substantially free of internal stresses after manufacture. Advantageously, the extruded rail may comprise a lubricant for example grease saturated UHMWPE.

The base portion may comprise a slab of material. Such a slab of material may for example be made of a low-cost material that may be provided with a portion of the keyed arrangement extending along the required curved mounting path relatively easily. An example of such a low cost material is conventional PE, recycled PE or PVC. The base portion may be continuous, and may e.g. be made from a single slab.

The rails may be held by the base portion via cooperating nut-and groove portions. To enhance fixation, the rails and base portion may be keyed interlockingly. The nut- and groove portions may then be interlocking, for example by providing an undercut, such as a dovetail or T-nut connection. The base portion may for example be embodied as a slab into which a number of concentrically, radially spaced grooves is machined, into which grooves the rails are keyed so that they are fixed. The rails may be keyed directly into the base portions, but may for example also be keyed to the base portion via an intermediate keying element. Such an intermediate keying element may for example be embodied as a strip with a cross-section shaped as an hour glass or a double dove tail of which the top and bottom portions reach into undercut grooves in the rail section and base portion respectively. The intermediate keying element may e.g. also be embodied as a strip that itself is mounted to the base portion, e.g. using screws. For example, an L-shaped or U-shaped mounting strip may be used that is screwed into the base portion and that keys into the rail.

The rail sections may be axially inserted into the grooves so as to assume the required curvature for the guide track. The friction experienced during axial insertion may be significantly reduced by subjecting the rails and/or the base portion to vibrational movement. As an alternative, the base portion may be machined to be provided with ridges that may continuously or discontinuously extend along a curve. Such ridges may form the nuts that cooperate with a groove provided in the rail sections. If desired, several rail sections may be placed behind each other. The rails may be free standing, i.e. with a portion of its height free of radial support.

The rails may be provided to include side and top guide surfaces. Also, the rails may be provided as solid portions, and may be provided with a core of another material. Further, the rails may be provided with a hollow inner portion, or with an open cross section.

The bend segment may comprise a plurality of concentrically curved guide tracks, each guide track comprising of a radially inwardly disposed guide rail and a radially outwardly disposed guide rail. Radially adjacent guide tracks may have a rail section in common. The radial outside of such a common single rail section may be used to guide one conveying chain, while the radial inside of the rail may be used to guide an adjacent conveying chain.

The invention also relates to a method of making a bend segment for a conveyor having at least one curvedly extending guide track for guiding a conveyor segment along a curve, comprising:
- providing a base portion;
- providing a number of rails, and
- fixing each rails as a separate section to the base portion in a keyed arrangement along a curved mounting path.

The rails may be manufactured as extruded sections, in particular by ram extrusion.

The base portion may be machined to include curvedly extending key portions for holding the rails.

The rails may be axially slid into engagement with the base portion, in particular assisted by vibration.

After the rails have been mounted to the base portion, the end faces of the bend segment may at the beginning and the end of the bend segment be machined to a substantially flat surface.

As a safety provision, the rails may still be screwed to the base portion near the beginning and the end of the bend segment.

The invention shall be illustrated further using an exemplary embodiment that is shown in a drawing. In the drawing,
Fig. 1 is a top view of a bend segment;
Fig. 2 is a side view of the bend segment of Fig. 1 at arrow A;
Fig. 3 shows an alternative to Fig. 2;
Figs. 4 and 5 shows alternatives of a keying arrangement for keying the rails to the base portion of the bend segment;
Figs. 6 - 9 show alternatives for ensuring that a conveyor chain is held in position in the bend segment;
Fig. 10A shows a schematic perspective view of a detail of the base of Fig. 1; and
Fig. 10B shows a schematic top view of the base of Fig. 1.
Figs. 10C-E show detailed views of the base of Fig. 1 as indicated in Fig. 10B.
Fig. 11 shows a schematic detail of a keyed arrangement of Fig. 2.

The figures show only schematic representations of exemplary embodiments, and are shown as non-limiting examples only.

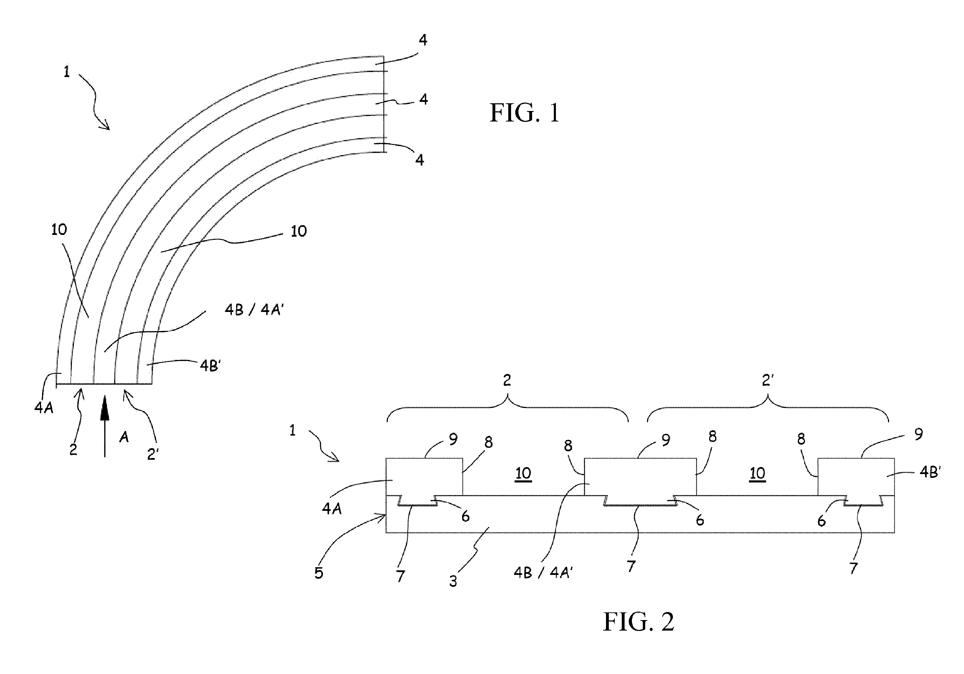

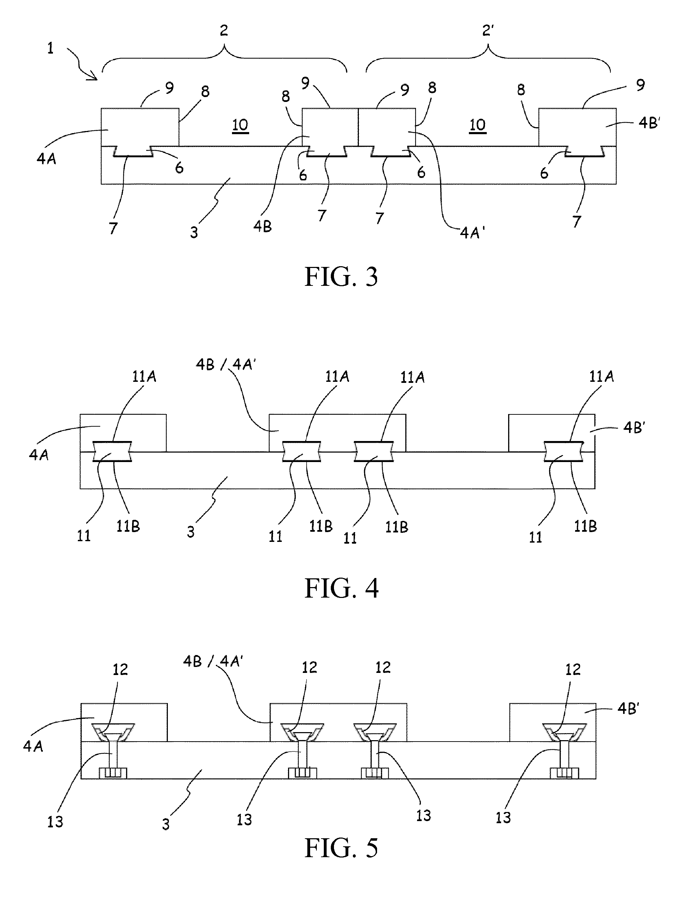

Figures 1 and 2 show a bend segment 1 for a conveyor. The bend segment 1 comprises a base portion 3 and at least two rails 4. Radially adjacent rails 4 form a curvedly extending guide track 2 for guiding a conveyor along the curve. The bend segment 1 may for example be supported on a frame of a conveyor, and may connect to straight guides or further bend segments. The bend segment may also include straight portions, e.g. at the beginning and the end of the guide track, and may include multiple curves. The bend segment 1 may have a single guide track 2 or may have a plurality of guide tracks 2. In the exemplary embodiment shown, the bend segment comprises two guide tracks 2, 2'. Each track 2, 2' comprises of two guide rails 4, a radially outwardly disposed guide rail 4A and a radially outwardly disposed guide rail 4B. The guide tracks 2, 2' are concentrically curved. Radially adjacent guide tracks 2 may have a rail 4 in common. In the exemplary embodiment shown, the radially inwardly disposed guide rail 4B of track 2 also forms the radially outwardly disposed rail 4A' of adjacent guide track 2'. In alternative embodiments, as for example shown in Figure 3, the radially inwardly disposed guide rail 4B of track 2 is a separate guide rail with respect to the radially outwardly disposed rail 4A' of adjacent guide track 2'.

The bend segment 1 may be used to guide a number of modular conveyor chains along a curve in the conveying track. In the exemplary embodiment shown, each guide track 2, 2' may accommodate a modular conveyor chain, such that the link arrangements of consecutive chain modules may be received in the interspaces 10 between the rails 4. The bottoms of the product support plates of the chain modules may rest on the top guide surfaces 9 of the rails 4. When going trough a bend, the link arrangements may be guided by the side guide surfaces 8.

The base portion 3 may comprise a slab of material, for example a slab of plastics material. In the exemplary embodiment, the base portion 3 is a continuous slab made of conventional PE or PVC. The base portion may be provided as a single slab.

The rails 4 may be fixedly mounted to the base portion 3 as a separate section in a keyed arrangement 5 along a curved path. The rails 4 may be made of a plastics material. In the exemplary embodiment, the rails are made of UHMWPE. In the exemplary embodiment, the rails are freestanding.

The base portion 3 may be machined to include curvedly extending key portions for holding the rails. Such key portions may include for example ridges or pedestals, or grooves. The rails 4 may be held by the base portion 3 via cooperating nut- and groove portions 6, 7. The rails and base portions may be keyed interlockingly. In the exemplary embodiment shown in Figure 2, the nut- and groove portions 6, 7 has been made interlocking by providing them with a dovetail connection.

The base portion 3 have, in the exemplary embodiment shown in Figure 2, been provided as a slab of conventional PE material into which a number of concentrically, radially spaced grooves 7 is machined.

The rail sections 4 are then inserted into the grooves 7 along their axis so as to assume the required curvature for the guide track 2. Each rail 4 may have a constant cross section, and the cross sections of each rail 4 may be the identical. As the rails 4 are provided with the curvature for the guide track 2 via the keyed arrangement 5, it may suffice to keep lengths of a single type of rail in stock, and cut the rails to the required length. If desired, the base portion 3 may be machined to compensate for any difference in deformation of the guide rails 4 caused by the different radiuses. For example, the grooves 7 for the more radially inwardly disposed rails 4 may be provided with a small incline with respect to the horizontal plane. This way, even if the cross section of more inwardly disposed rails becomes skewed due to the relatively strong radius of curvature that is imposed onto the rail 4, the rails 4 may be mounted in a slightly tilted orientation so that the top surfaces 9 of the rails remain more or less horizontal and aligned with each other.

The rails 4 may be provided as extruded sections in this example, the rails may be provided as extruded sections. In this exemplary embodiment, the rails 4 have been provided as extruded rails of UHMWPE, that have been manufactured in a ram-extrusion process. Ram extruded rails may be made on the bases of powdered resin. Powdered resin may be fed from a hopper to a heating chamber where it is molten into a gel. The molten resin is then batch-wise extruded from the chamber through a die using e.g. a hydraulic ram. This way, long, straight lengths of rails may be extruded.

The bend segment 1 of the exemplary embodiment may be made by cutting lengths of straight extruded rail to rails 4 of the required length. Next the rails 4 may be axially inserted with their nut portions 6 into the grooves 7 that have been machined in the base portion 3 as discussed above. A longitudinal vibrating movement may be applied to facilitate insertion. After the rails 4 have been axially slid into engagement with the base portion 3, the end faces of the bend segment 1 may be machined to a substantially flat surface so that the ends of the rails 4 may be smoothly aligned with the end faces of the bend segment 1.

In the embodiments of Figures 2 and 3, the rails 4 are keyed directly into the base portion 3. In alternative embodiments, as the exemplary ones shown in Figures 4 and 5, the rails 4 may be keyed to the base portion 3 via an intermediate keying element. Such an intermediate keying element may for example be embodied, as in Figure 4, as a strip 11 with a cross-section shaped as a double dove tail or, alternatively, an hour glass, of which the top and bottom portions reach into undercut grooves 11A and 11B in the rail section 4 and base portion 3 respectively. The intermediate keying element may e.g., as in Figure 5, also be embodied as a strip 12 that itself is mounted to the base portion 3, e.g. using screws 13. For example, an L-shaped or U-shaped mounting strip 12 may be used that is screwed into the base portion 3 and that keys into the rails 4.

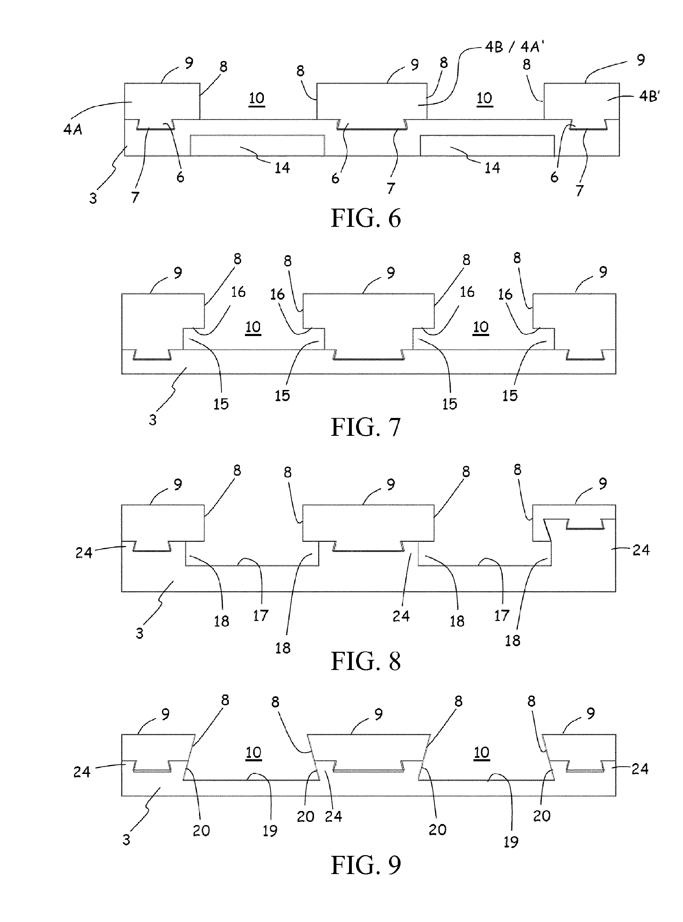

As schematically depicted in Figure 6, the bend segment 1 may be provided with magnets 14 to attract the modules of the conveyor chains and/or their connecting pins to the track 2. In particular, the magnets 14 may be embedded in the base portion 3, under the interspaces 10 between the rails 4. The magnets 14 ensure that some types of conveyor chains in the bent section are held in place, even without any geometric constraint (like for example those shown in the following Figures 7, 8, 9 described hereinafter).

As an alternative to the magnets 14, in order to ensure that the conveyor chains are held in position in the bend segment, the rail sections 4 and/or the base portion 3 may be shaped so that the interspaces 10 where the chain modules are received are wider at the bottom (close to the top surface of the base portion 3) and narrow at the top (close to the top guide surface 9 of the rails 4).

For example, as schematically shown in Figure 7, the rails 4 may be formed so that, at their side guide surface(s) 8, the rail sections 4 have a reduced width at the bottom (opposite to the top guide surface 9), thereby defining a recess 15 with an upper shoulder 16 adapted to accommodate and retain vertically the sides of the conveyor chains. Alternatively, as depicted in Figure 8, the base portion 3 may comprise, in correspondence of the interspaces 10, grooves 17 that transversally extend under the adjacent rails 4, so as to define recesses 18 under edges of the rails 4, adapted to accommodate and retain vertically the sides of the conveyor chains.

As a further alternative, schematized in Figure 9, the side guide surface(s) 8 of the rails 4 may be slanted, instead of vertical, so that the width of the rails 4 increases from their bottom to their top; preferably, the base portion 3 may also in this case comprise, in correspondence of the interspaces 10, grooves 19 that transversally reach the adjacent rails 4, and such grooves 19 preferably have slanted side walls 20, so that the grooves' width is larger at their bottom. In the configurations of Figures 7 and 8 a relatively thick slab of base material may be machined to include a protruding foundation 24 for the rail 4, while the rail 4 itself forms the top-and side guide surfaces 8, 9. On the right hand side of Fig. 8 an enlarged foundation 24 is shown as an alternative.

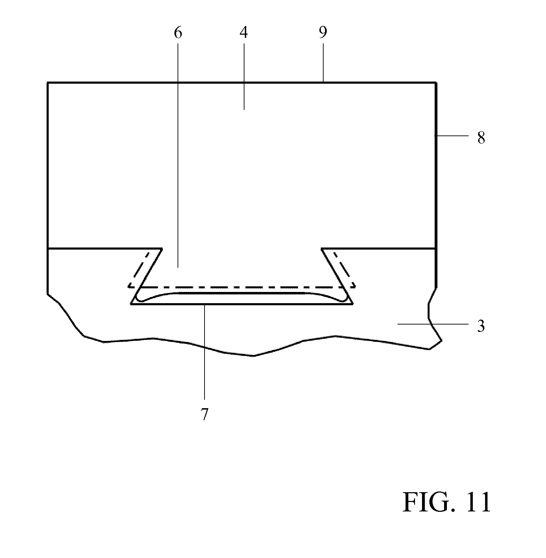

Referring to Figure 11, the rails 4 may be fixedly mounted to the base portion 3 in a keyed arrangement 5 having an interference fit. In such interference fit, the male and female parts of the keyed arrangement may be oversized relative to each other, so that they engage with high friction. Axial movement of the rails relative to the base portion 3 then requires such large force, that they are effectively fixedly mounted relative to each other during use. Preferably, a male portion of the keyed arrangement 5 is oversized relative to the corresponding female portion. In the embodiment shown, the keyed arrangement 5 is formed by cooperating nut- and groove portions 6, 7 that are provided with interference fit and undercut. In particular, the keyed arrangement is embodied as a so called dovetail connection, of which the male part, here the nut 6, is carried on the rail 4. By providing the male part, i.c. the nut 6, with a large width relative to the width of the female part, here the groove 7, an interference fit may by realized that is prestressed to close. By providing the height of the male part 6, i.c. the nut, to be smaller than the height of the female part 7, i.c. the groove, the width reduction of the nut due to the compression may be compensated for by an increase of height of the nut. The compensation facilitates axial insertion of the rail 4 with interference fit. In Fig. 11, it is shown how the dovetail connection deforms to provide the interference fit by indicating the original shape of the nut with a dotted line. The oversize in width of the nut 6 may e.g. be chosen about 2-8% of the width of the groove 7.

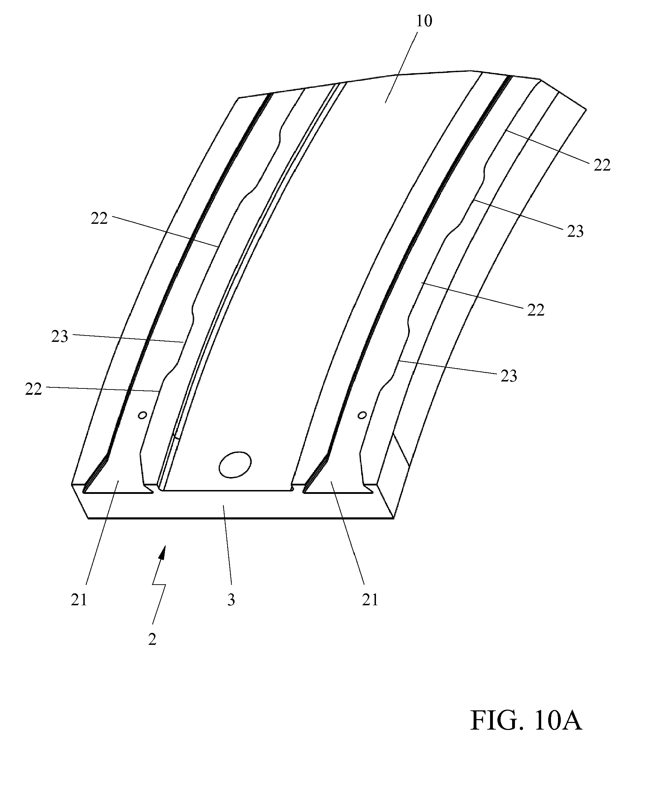

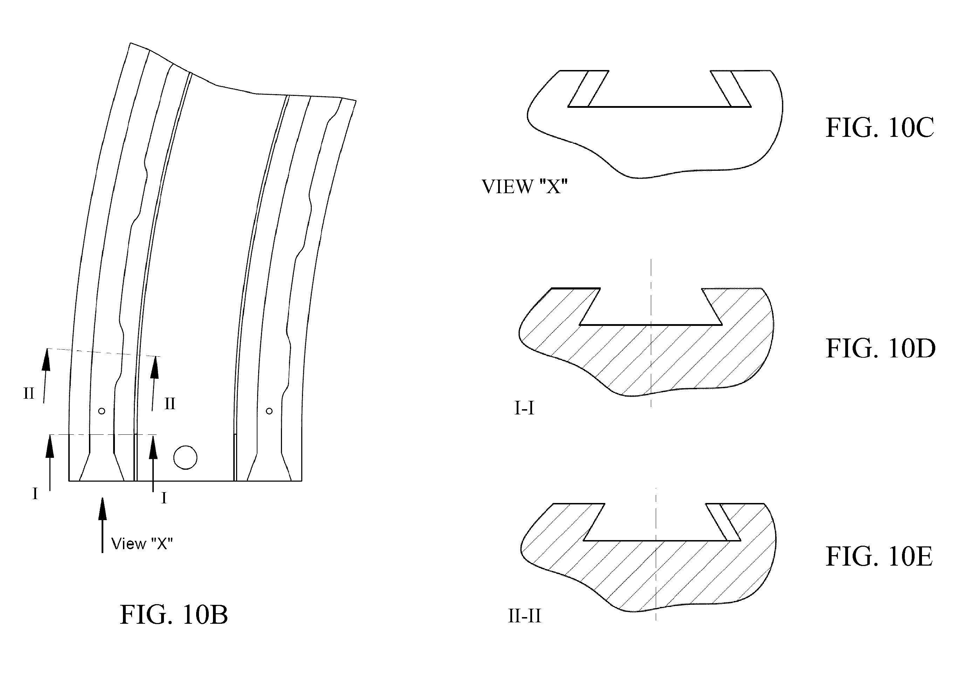

To further facilitate insertion, the rail 4 may be pulled into engagement with the groove 7. Referring to Fig. 10, to facilitate insertion the groove 7 may be provided with a tapering inlet portion 21 having an oversize relative to the nut 6. The groove 7 may at an radial inner top edge 22 be provided with widened portions 23. Such widened portions 23 allow stress relief, and may e.g. be distributed along the length of the groove 7 to interspace tight fitting portions 24 of the inner top edge 22. As shown, the male portion 6 of the dovetail carried on the rail 4 has an angle of about 60°, relative to the bottom plane.

The invention may be further defined by the following numbered embodiments.

### Embodiments

1. A bend segment (1) for a conveyor, having at least one curvedly extending guide track (2,2') for guiding a conveyor along a curve, the bend segment comprising a base portion (3) and at least two rails (4) forming a guide track, wherein the rails are each fixedly mounted to the base portion as a separate section in a keyed arrangement along a curved mounting path.
2. The bend segment according to embodiment 1, wherein the rails are straight in unmounted condition, and are provided with the curvature for the guide track via the keyed arrangement.
3. The bend segment according to embodiment 1 or 2, wherein the rails are provided as extruded sections, in particular as ram extruded sections.
4. The bend segment according to any of the preceding embodiments, wherein the base portion comprises a slab of material.
5. The bend segment according to any of the preceding embodiments, wherein the rails are axially slid onto the base portion.
6. The bend segment according to any of the preceding embodiments, wherein the rails are held by the base portion via cooperating nut- and groove portions (6,7).
7. The bend segment according to embodiment 6, wherein the nut-and groove portions are provided with undercut.
8. The bend segment according to any of the preceding embodiments, wherein the rails are freestanding.
9. The bend segment according to any of the preceding embodiments, wherein the rails each include side and top guide surfaces (8,9).
10. The bend segment according to any of the preceding embodiments, wherein the rails comprise a hollow inner portion.
11. The bend segment according to any of the preceding embodiments, wherein the rails have a constant cross section.
12. The bend segment according to any of the preceding embodiments, comprising a plurality of concentrically curved guide tracks, each track comprising of a radially inwardly disposed guide rail and a radially outwardly disposed guide rail.
13. A method of making a bend segment (1) for a conveyor having at least one curvedly extending guide track (2,2') for guiding a conveyor segment along a curve, comprising:
   - providing a base portion (3);
   - providing a number of rails (4), and
   - fixing each rail as a separate section to the base portion in a keyed arrangement along a curved mounting path.
14. The method of embodiment 13, wherein the rails are manufactured as extruded sections, in particular by ram extrusion.
15. The method of embodiment 13 or 14, wherein the base portion is machined to include curvedly extending key portions for holding the rails.
16. The method of any of embodiments 13-15, wherein the rails are axially slid into engagement with the base portion.
17. The method of any of embodiments 13-16, wherein after the rails have been mounted to the base portion, the end faces of the bend segment at the beginning and the end are machined to a substantially flat surface.

It shall be clear to the skilled person that the invention is not limited to the exemplary embodiment described and that many variations are possible within the frame work of the invention as defined in the appended claims.

## Claims

1. A bend segment (1) for a conveyor, having at least one curvedly extending guide track (2,2') for guiding a conveyor along a curve, the bend segment (1) comprising a base portion (3) and at least two rails (4) forming a guide track, wherein the rails are each fixedly mounted to the base portion as a separate section in a keyed arrangement (5) along a curved mounting path, **characterized in that** the rails (4) are provided as extruded sections.

2. The bend segment of claim 1, wherein the rails are provided as ram extruded sections.

3. The bend segment of claim 2, wherein the rails are made of ram extruded UHMWPE powder.

4. The bend segment of claim 3, wherein the extruded rail may comprise a lubricant.

5. The bend segment of claim 4, wherein the lubricant comprises grease saturated UHMWPE.

6. The bend segment (1) according to any of the preceding claims, wherein the rails (4) are straight in unmounted condition, and are provided with the curvature for the guide track via the keyed arrangement (5).

7. The bend segment (1) according to any of the preceding claims, wherein the base portion (3) comprises a slab of material.

8. The bend segment (1) according to any of the preceding claims, wherein the rails (4) are axially slid onto the base portion (3).

9. The bend segment (1) according to any of the preceding claims, wherein the rails (4) are held by the base portion via cooperating nut- and groove portions (6,7).

10. The bend segment (1) according to claim 9, wherein the nut- and groove portions (6,7) are provided with undercut.

11. The bend segment (1) according to any of the preceding claims, wherein the rails (4) are freestanding.

12. The bend segment (1) according to any of the preceding claims, wherein the rails (4) each include side and top guide surfaces (8,9).

13. The bend segment (1) according to any of the preceding claims, comprising a plurality of concentrically curved guide tracks (2,2'), each track comprising of a radially inwardly disposed guide rail (4B) and a radially outwardly disposed guide rail (4A).

14. A method of making a bend segment (1) for a conveyor having at least one curvedly extending guide track (2,2') for guiding a conveyor segment along a curve, comprising:
- providing a base portion (3);
- providing a number of rails (4), and
- fixing each rail (4) as a separate section to the base portion (3) in a keyed arrangement (5) along a curved mounting path.
wherein the rails (4) are manufactured as extruded sections.

15. The method of claim 14, wherein the rails are manufactured by ram extrusion.

16. The method of claim 15, wherein the rails are made of ram extruded UHMWPE powder.

17. The method of claim 16, wherein the extruded rail comprises a lubricant.

18. The method of claim 17, wherein the lubricant comprises grease saturated UHMWPE.
